# EUROPEAN PATENT APPLICATION

(11) **EP 4 625 352 A1**
(43) Date of publication of application: **01.10.2025**
(21) Application number: 25165549.4
(22) Date of filing: 24.03.2025
(51) Int. Cl.: G06V 10/70

(54) **SYSTEMS FOR TISSUE SPECIMEN ANALYSIS AND METHODS OF OPERATING THE SAME**

(30) Priority: 25.03.2024 US 202463569628 P
(71) Applicant: Perimeter Medical Imaging AI, Inc., Toronto, Ontario M5V 3B1 (CA)
(72) Inventor: BAYRAM,, Ersin, Toronto, M5V 3B1 (CA); NGUYEN,, Duc Huy Hoang, Toronto, M5V 3B1 (CA); LEVY,, Yanir, Toronto, M5V 3B1 (CA); REMPEL,, David, Toronto, M5V 3B1 (CA)
(74) Representative: Potter Clarkson

(57) **Abstract**

Systems and methods for tissue specimen analysis. Methods for tissue specimen analysis may include: retrieving a primary image data set including a plurality of images representing a tissue specimen margin; generating a reduced data set representing images having suspected artifacts based on a first detection model and the primary image set, the first detection model trained based on pathology-confirmed images and for prioritizing reducing false negative identification of artifacts while minimizing training penalization for false positive identification of artifacts; generating a prediction data set representing a subset of the reduced data set based on a second detection model and the reduced data set; and generating a signal representing the prediction data set for displaying one or more images predicting a true positive identification of a suspected artifact.

## Description

### FIELD

Embodiments of the present disclosure generally relate to the field of image analysis and, in particular, to systems and methods of intraoperative tissue margin analysis.

### BACKGROUND

Surgical oncology is directed to surgical management of cancerous tumors. In some situations, excised tissue specimens from cancer patients may be examined based on operations for microscopic pathological examination. Such operations may be labor and time intensive, and results of the analysis are not available until several days after a surgical procedure.

### SUMMARY

In some scenarios, it may be desirable to determine during a surgical procedure whether an identified cancerous lesion has been entirely removed while a surgical patient is still within an operating room environment. It may be desirable to provide image analysis operations for excised tissue specimens in substantially real time during a surgical procedure and with relatively high accuracy or precision akin to pathologic evaluation of tissue samples.

In some embodiments, tissue specimen margins may be represented by a plurality of images, such as wide field OCT B-scan images. Further, the B-scan images may be sub-divided into image patches for analysis. In some scenarios, a voluminous number of images may need to be analyzed for determining whether a tissue specimen margin may be a positive margin. It may be desirable to optimize the analysis based at least on the following metrics, including minimizing false negative identification of cancerous cells, minimizing false positive identification of cancerous cells, maximizing true positive identification of cancerous cells, and maximizing true negative identification of cancerous cells.

To provide desired accurate prediction based on images and to provide such predictions within time constraints governed based on surgical procedure time slots, in some embodiments, systems and methods are provided for conducting tissue specimen analysis may be based on at least two tiers of prediction models.

In some embodiments, a first prediction detection model tier may provide computationally efficient predictions for reducing the image data set representing tissue specimen margins, understanding that predictions may not have high accuracy. In some examples, the model may identify high confidence negative margin areas that may be ignored. For example, the first prediction detection model may accurately predict negative indications, while not accurately predicting positives margins.

In some embodiments, a second prediction detection model tier may receive a reduced data set including images representing true positive and false positive prediction for artifacts. Because the reduced data set includes a less voluminous set of images, the second prediction detection model may be more computationally expensive to achieve higher prediction accuracy to identify false positive prediction for artifacts.

In the health care sector, because a false positive prediction of whether a tissue specimen may have suspected cancerous cells at a tissue specimen margin may trigger downstream analysis of the tissue spectrum, compromising prediction accuracy for false positive predictions during the first prediction detection model tier of operations may be acceptable. As will be described in some embodiments, identifying false positive margins may be tolerable so as not to enforce onerous design constraints on a prediction model. In some embodiments, a first model identifying false positive predictions will be subject to a second model search space, such that the second model may identify false positive margins as negative margins. However, in scenarios where false negatives are eliminated from a search space, a second model will not have an opportunity to make a prediction and a positive margin may be missed or unidentified.

Features of embodiments of systems and methods for tissue specimen analysis will be described in the present disclosure.

In one aspect, the present disclosure describes a system for tissue specimen analysis. The system may include a processor and a memory coupled to the processor. The memory may store processor-executable instructions that, when executed, configure the processor to: retrieve a primary image data set including a plurality of images representing a tissue specimen margin; generate a reduced data set representing images having suspected artifacts based on a first detection model and the primary image set, the first detection model trained based on pathology-confirmed images and for prioritizing reducing false negative identification of artifacts while minimizing training penalization for false positive identification of artifacts; generate a prediction data set representing a subset of the reduced data set based on a second detection model and the reduced data set, the second detection model generating the prediction data set within a second time constraint greater than a first time constraint associated with the first detection model; and generate a signal representing the prediction data set for displaying one or more images predicting a true positive identification of a suspected artifact

In another aspect, the present disclosure describes a method of tissue specimen analysis. The method may include: retrieving a primary image data set including a plurality of images representing a tissue specimen margin; generating a reduced data set representing images having suspected artifacts based on a first detection model and the primary image set, the first detection model trained based on pathology-confirmed images and for prioritizing reducing false negative identification of artifacts while minimizing training penalization for false positive identification of artifacts; generating a prediction data set representing a subset of the reduced data set based on a second detection model and the reduced data set, the second detection model generating the prediction data set within a second time constraint greater than a first time constraint associated with the first detection model; and generating a signal representing the prediction data set for displaying one or more images predicting a true positive identification of a suspected artifact.

In another aspect, a non-transitory computer-readable medium or media having stored thereon machine interpretable instructions which, when executed by a processor may cause the processor to perform one or more methods described herein.

In various further aspects, the disclosure provides corresponding systems and devices, and logic structures such as machine-executable coded instruction sets for implementing such systems, devices, and methods.

In this respect, before explaining at least one embodiment in detail, it is to be understood that the embodiments are not limited in application to the details of construction and to the arrangements of the components set forth in the following description or illustrated in the drawings. Also, it is to be understood that the phraseology and terminology employed herein are for the purpose of description and should not be regarded as limiting.

Many further features and combinations thereof concerning embodiments described herein will appear to those skilled in the art following a reading of the present disclosure.

### DESCRIPTION OF THE FIGURES

In the figures, embodiments are illustrated by way of example. It is to be expressly understood that the description and figures are only for the purpose of illustration and as an aid to understanding.

Embodiments will now be described, by way of example only, with reference to the attached figures, wherein in the figures:
FIG. 1 illustrates a diagram showing A-scans and B-scans in a cartesian coordinate system, in accordance with an embodiment of the present disclosure;
FIG. 2 illustrates a schematic representation of a wide field Optical Coherence Tomography imaging framework for excise tissue specimens, in accordance with embodiments of the present disclosure;
FIG. 3 illustrates a flowchart showing outputs of a system for tiered categorization of image patches representing excised tissue specimens, in accordance with embodiments of the present disclosure;
FIG. 4 illustrates a block diagram of a convolutional neural network-based classification model, in accordance with an embodiment of the present disclosure;
FIG. 5 illustrates a system, in accordance with embodiments of the present disclosure;
FIG. 6 illustrates a high-level block diagram of a prediction system, in accordance with embodiments of the present disclosure;
FIG. 7 illustrates a high-level block diagram of a prediction system, in accordance with another embodiment of the present disclosure;
FIG. 8 illustrates a tissue specimen analysis system, in accordance with an embodiment of the present disclosure;
FIG. 9 illustrates an image representing a tissue surface of a tissue specimen, in accordance with an embodiment of the present disclosure; and
FIG. 10 illustrates a flowchart of a method for tissue specimen analysis, in accordance with an embodiment of the present disclosure.

### DETAILED DESCRIPTION

Embodiments of the present disclosure are directed to systems and methods of image analysis of excised tissue specimens.

For cancer patients, a first line of treatment is a surgical removal of an identified tumor or tissue. In the field of surgical oncology, surgeons or medical staff may remove tissue specimens from patients during a surgical procedure. It may be desirable to determine during a surgical procedure whether an identified cancerous lesion has been entirely removed while a surgical patient is still within an operating room environment.

Once a tumor is removed, operations for validating that removed tissue specimens do not have cancerous cells at an excised tissue margin may be desired for patient prognosis. In some scenarios, identification of cancerous cells at an excised tissue margin may be identified as a positive margin.

In some scenarios, positive margins may increase locoregional recurrence rates in patients with breast, colorectal, oral cavity, bladder, or uterine cancer, among other types of conditions. In some scenarios, positive surgical margins may decrease disease-specific survival rates in patients with breast or bladder cancer, and may decrease overall survival rate in colorectal, oral cavity, or lung cancer patients.

In some scenarios, for patients with oral cavity, thyroid, colorectal, or lung cancer, positive margins may lead to required re-resection procedures in patients, in addition to other procedures such as adjuvant chemotherapy or radiotherapy. Such additional treatments that otherwise would be required if positive margins were identified during a surgical procedure may necessitate additional patient treatment and may negatively impact patient prognosis, lead to relatively higher risk of complications, and thereby contribute to increased costs for patient treatment.

In some scenarios, excise tissue specimen margin analysis is conducted based on microscopic pathologic evaluation of excised tissue specimens. Operations for microscopic pathologic evaluation are labor and time intensive and may require several days before a final margin result is provided. As such, microscopic pathologic evaluation may not provide a surgeon with a margin result during a surgical procedure. Thus, if a pathologist determines that a final margin status is positive, in some scenarios a patient may be required to be subject to a second surgical procedure.

In some scenarios, intraoperative specimen analysis may be conducted based on operations of palpation, frozen sectioning, and specimen analysis. Frozen sectioning operations may have technical and practical implementation challenges, and specimen radiography may not be suitable for margin assessment of several breast cancer types. In some examples, specimen imaging techniques such as fluorescence imaging, Raman spectroscopy, or photoacoustic tomography may not yet have been integrated into routine clinical operations and may have inherent challenges.

Embodiments of the present disclosure are directed to systems and methods of image analysis for excised tissue specimens. Embodiments of systems and methods of image analysis described herein may be for intraoperative excised tissue margin analysis. In scenarios where excise tissue margins may be intraoperatively identified as positive margin, additional tissue portions may be removed for microscopic pathologic evaluation. Such embodiments may assist with reducing the percentage of positive final margins in association with breast or rectal surgery.

In some embodiments, systems and methods of image analysis may be based on a plurality of images corresponding to excised tissues. For example, the plurality of images may be generated by optical coherence tomography (OCT) imaging. OCT may be an imaging technique based on interferometry with short-coherence-length light to generate micrometer-level depth resolution and may use transverse scanning of light beams to form two-dimensional or three-dimensional images from light reflected from within biological tissue or scattering media.

In some embodiments, other types of imaging modalities may be used. For example, embodiments described herein may be configured for imaging systems associated with diagnosis and screening operations. For example, embodiments having imaging modalities for mammogram imaging may be used for generating images.

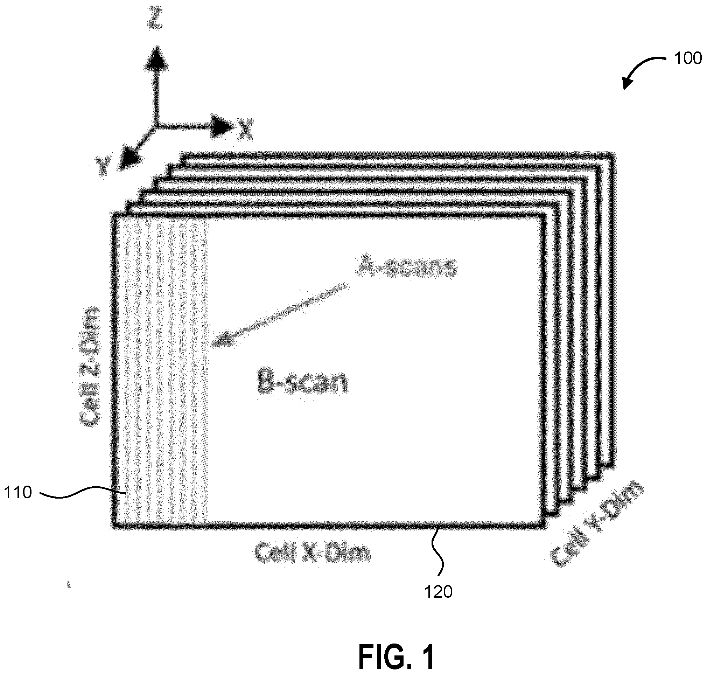

In some examples of OCT systems, operations for image signal acquisition and reconstruction may be conducted on a point-by-point basis. Reference is made to FIG. 1, which illustrates a diagram 100 showing A-scans and B-scans in a cartesian coordinate system, in accordance with an embodiment of the present disclosure. A resolved depth map at a specific (x,y) location is an A-scan 110. Imaging slices or B-scans 120 may be generated by sequentially or successively scanning the A-scans 110.

OCT generated images may represent portions of excised tissue specimens. As will be described herein, some embodiments of systems directed to image analysis of excised tissue specimens may be based on retrieving one or a plurality of B-Scan images and conducting operations of image classification, object detection, or object segmentation, among other image analysis operations on the B-Scan images representing portions of excised tissue specimens.

In some embodiments, B-Scan images may be 420 x 2,400 pixel images. In some embodiments, wide-field OCT (WF-OCT) images may be sub-divided into smaller-sized, overlapping patches with a 0.5 step size, respectively being 420 x 188 pixel images. Other image sizes or dimensions may be used.

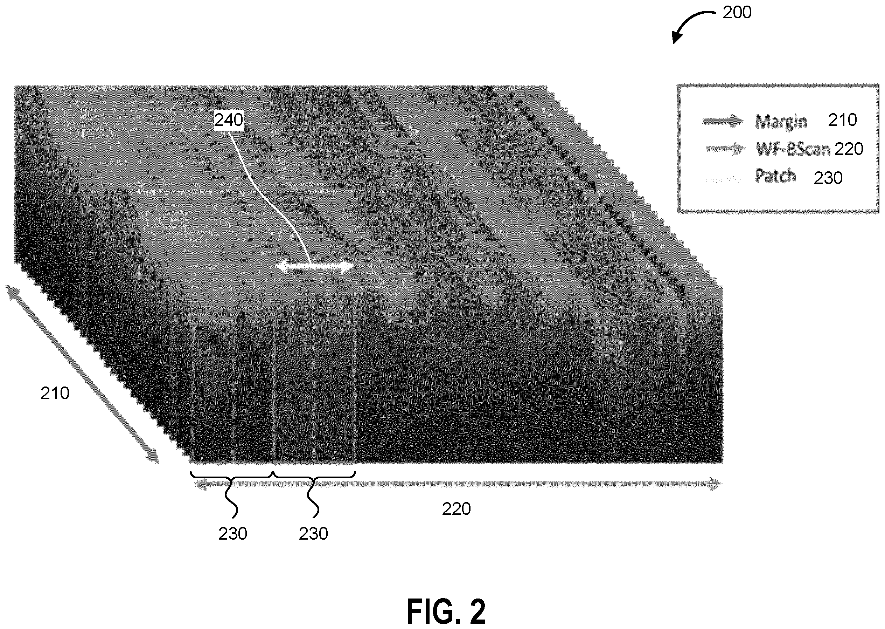

Reference is made to FIG. 2, which illustrates a schematic representation of a wide field Optical Coherence Tomography (WF-OCT) imaging framework 200 for excise tissue specimens, in accordance with embodiments of the present disclosure. It may be desirable to provide a data set framework representing excise tissue specimens for analysis by embodiments of systems described herein.

As an example, an excised tissue specimen may have 6 tissue margins assessed, where respective tissue margins may be represented by a plurality or set of B-scan images. In some scenarios, respective tissue margins may include 300 to 700 B-scan images, where respective B-scan images may be divided into overlapping rectilinear regions of interests known as image patches. In some scenarios, respective tissue margins may include approximately 30 patches per B-scan image.

FIG. 2 illustrates an excised tissue specimen margin 210 composed of a plurality of WF-OCT B-scans 220. One or more patches 230 may be defined by a sliding window width 240 traversing respective B-scans 220. In some scenarios, there may be 50,000 to 120,000 patches representing respective excised tissue specimen margin. Depending on the volume or size of an excised tissue specimen, the number of B-scan images or image patches representing a margin of the excised tissue specimen may be more or less than the examples described herein.

Due to the voluminous number of image patches representing sub-divided image portions of an excised tissue specimen, it may be computationally intensive to intraoperatively identify one or more patches 230 as positive or negative margins in substantially near real-time during a lumpectomy procedure. FIG. 2 also illustrates challenges associated with identifying visual features within a tissue margin which would stretch over two or more patches 230.

It may be desirable to provide systems and methods of image analysis for excised tissue specimens for conducting object detection, object segmentation, or object classification operations on images representing excised tissue specimens: (1) in substantially real time during a lumpectomy procedure; and (2) with relatively high accuracy or precision relative to an established ground truth based on pathologic evaluation of training data set images.

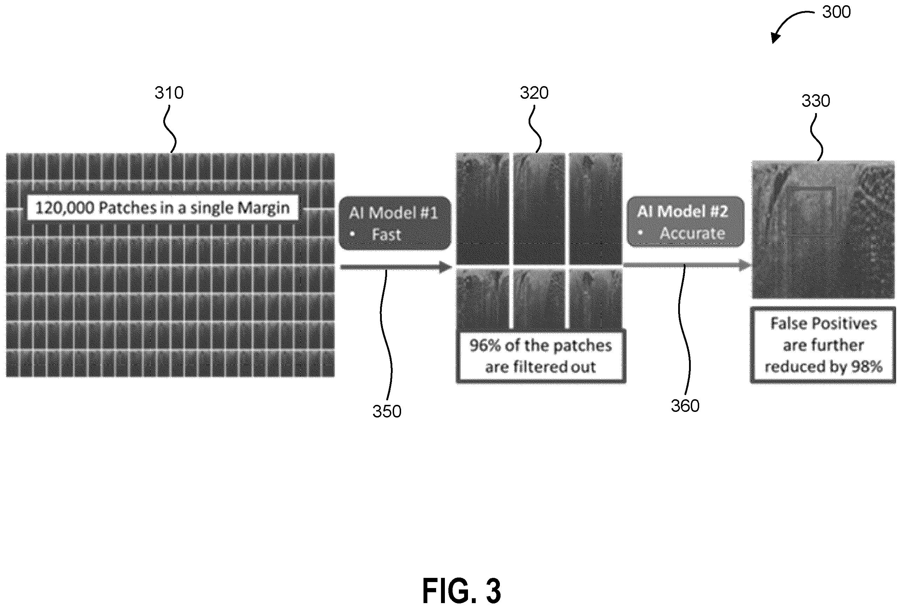

Reference is made to FIG. 3, which illustrates a flowchart 300 showing outputs of a system for tiered categorization of image patches representing portions of excised tissue specimens for identifying positive excise tissue margins, in accordance with embodiments of the present disclosure.

Continuing with the earlier-described example of 120,000 images, FIG. 3 illustrates an input data set 310 representing an excised tissue specimen. The input data set 310 may include approximately 120,000 image pages representing a margin of the excised tissue specimen.

An embodiment of the system for tiered categorization of image patches may include a first model 350 including operations for categorizing the image patches in a computationally expedient way to provide a filtered data set 320 having a reduced number of image patches representing portions of the excised tissue specimen that may correspond to a positive margin.

In some embodiments, the first model 350 may be configured to be computationally expedient. The first model 350 may be trained to minimize false negatives. False negatives may be operations that may have identified positive / suspicious patches as negative. The first model 350 may be trained such that false positives are not heavily penalized. In a prototype system experiment, the first model 350 may include operations for categorizing 96% of the image patches of the input data set 310 as representing non-positive margins.

In the present example, the filtered data set 320 may include approximately 4% of the image patches of the input data set 310 and may be provided as an input data set to a second model 360. The second model 360 may include operations for conducting a finer grain categorizing of image patches with higher accuracy whilst having reduced computational efficiency and timeliness as compared to operations of the first model 350.

The second model 360 may include operations for further reducing the image data set such that 98% of the image patches of the input data set 310 are identified as representing non-positive margins. In the present example, the sub-filtered data set 330 results in false positive identification of positive margins further reduced by 98%. The second model 360 may include operations for conducting image patch categorization with relatively high accuracy while having increased computation / inferencing time.

In some embodiments, the second model 360 may include an ensemble of neural networks configured for voting on whether respective image patches represent a positive margin. For instance, an ensemble of neural networks may include a plurality of individual networks independently trained, and a final vote may be an ensemble of the respective network outputs (e.g., a majority vote being determinative). In some embodiments, the ensemble of neural networks may include 10 independently trained neural networks, or any other number of independently trained neural networks.

In the above-example, the computationally intensive nature of the second model 360 may be tolerable within the context of the image analysis system at least because the filtered data set 320 (being input to the second model 360) includes approximately 4% of the input pages of the original input data set 310, thereby providing a 25-fold reduction in problem space. For example, a 10-fold increase in computational time due to the ensemble of neural network model voting may be acceptable when the input to the second model 360 represents a 25-fold reduction in the image patch sample universe. In the present example, the second model 360 reduces false positive identification of image patches by 98%, which represents a marked reduction over what the first model 350 may identify as positive margins among image patches.

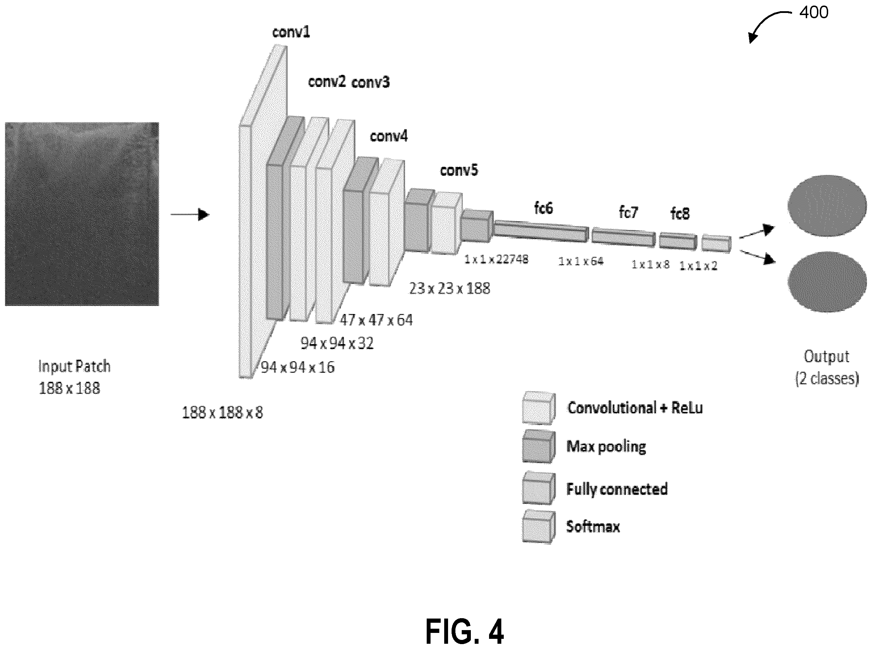

Reference is made to FIG. 4, which illustrates a high-level block diagram of a convolutional neural network (CNN) based classification model 400, in accordance with an embodiment of the present disclosure. The CNN-based classification model 400 may be an example of the first model 350 referenced in FIG. 3. The CNN-based classification model 400 may be trained to heavily penalize for missed positive margin classifications.

In some embodiments, the CNN-based classification model 400 may include five convolutional layers and three fully connected layers. The 5-layer CNN-augmented with 3 fully connected layers may be characteristic of approximately 1.5 million model parameters. In some embodiments, decision threshold values may be setup as 50% to generate higher sensitivity at an expense of increased false positive classifications.

In an experiment, a database of pathology-correlated wide-field OCT images was used for characterizing a prototype embodiment system of the present disclosure. The example CNN-based classification model 400 was developed based on 586 wide-field OCT margin image scans from 151 subjects for breast cancer indications. In a trial / experiment, through independent testing on 155 pathology-confirmed margins (including 31 identified positive margin samples) from 29 patients, the prototype CNN-based classification model 400 achieved an area under the receiver operating characteristic (ROC) of 0.976, a sensitivity of 0.93, and a specificity of 0.87. At the margin level, the CNN-based classification model 400 accurately identified 96.8% of pathology-positive margins. Table 3 (below) shows detailed performance metrics at different classification threshold values.

**Table 3:**

| **Classificatio n Threshold** | **Sensitivity (Recall)** | **Specificity** | **F1-Score** | **MCC** | **PPV (Precision)** | **NPV** | **Positive LR** | **Negative LR** |
|---|---|---|---|---|---|---|---|---|
| 0.5 | 0.96 | 0.969 | 0.73 | 0.542 | 0.317 | 0.999 | 30.97 | 0.04 |
| 0.6 | 0.948 | 0.974 | 0.749 | 0.567 | 0.35 | 0.999 | 36.46 | 0.05 |
| 0.7 | 0.935 | 0.978 | 0.768 | 0.594 | 0.387 | 0.999 | 42.50 | 0.07 |
| 0.8 | 0.894 | 0.986 | 0.808 | 0.648 | 0.479 | 0.998 | 63.86 | 0.11 |
| 0.9 | 0.768 | 0.996 | 0.871 | 0.743 | 0.727 | 0.997 | 192.00 | 0.23 |
| 1 | 0 | 1 | 0 | 0 | 1 | 0 | - | 1.00 |

The CNN-based classification model 400 performance parameters across various binary classification thresholds of suspicious margins using an independent test data Mathews Correlation Coefficient (MCC), Positive Predictive Value (PVV), Negative Predictive Value (NPV), or Likelihood Ratio (LR).

In an example, setting the classification threshold value at 50% results in the CNN-based classification model 400 labeling patches with 50% or higher confidence level as a suspicious patch as a potentially with a positive margin. Table 3 shows that at this threshold value, the classification model 400 may have a sensitivity (recall) of 96%, which is at the cost of a high number of false positives as precision may be at 31.7%.

In some scenarios, a desired feature of having fast-inferencing time may conflict with deeper more sophisticated network architecture models considering the voluminous size of data sets, such as 600 to 800 images for large, excised tissue specimens and up to a 420 x 5600 matrix size.

To illustrate the computationally expedient nature of the example CNN-based classification model 400, Table 4 (below) shows metrics illustrating computational resource differences between the CNN-based classification model 400, that may be otherwise known as the ImgAssist (CNN) model (characterized based on 1.56 parameters), EfficientNetV2 (characterized based on 24 million parameters), and Ensemble Methods (characterized based on 48 million parameters, bagging with n-2 estimators) when tested on an entire example margin.

**Table 4: Showing average inferencing time of different models for clinical decision support**

| **Model** | **Parameters (Million)** | **Avg Time Per Margin (s)** | **% Increase** |
|---|---|---|---|
| ImgAssist (CNN) | 1.56 | 6.4 | 0% |
| EfficientNetV2 (Small) | 24 | 82.2 | 1184% |
| Ensemble (N=2 EfficientNetV2) | 48 | 176.7 | 2661% |

Table 4 shows and contrasts the computational effects of large models on inferencing times. Utilizing a more accurate classification model may reduce the number of false positive classifications while regaining the number of true positives would result in an over 2,600% increase in total inferencing time, increasing image interpretation time, resulting in a longer cold ischemic window, increased surgery time, thereby hindering platform adaptation.

While computational overhead may be undesirable in some scenarios, ensemble learning may be a desirable choice when highly accurate decision or classification operations are required. To illustrate, an example model breast tissue classifier was prototyped, where the breast tissue classifier was based on already labeled training data sets established for the CNN model development. Table 5 (below) illustrates blinded testing results of an ensemble of multiple EfficientNets.

**Table 5: Showing feasibility test of ensemble learning based classifier on blinded test data**

| | Precision | Recall | F1-score | Support |
|---|---|---|---|---|
| Calcification | 1 | 1 | 1 | 932 |
| Suspicious | 0.96 | 0.97 | 0.97 | 3352 |

With the ensemble learning approach, testing revealed 100% and 97% F1-Scores for the classes of calcification and suspicious, respectively, as a measure of accuracy. However, such a model may not be feasible for conducting a sweep of an entire margin due to relatively large computational requirements, as suggested by results summarized in FIG. 4.

In some embodiments, an ensemble-based model may be an example of the second model 360 referenced in FIG. 3. In a prototype model experiment of an embodiment system of the present disclosure, an ensemble of two fine-tuned pre-trained EfficientNetV2-Small estimators employing bagging was used.

In the above-described prototype ensemble-based model, the model retained 3136/3585 (87.5%) of true positive patches from the first model 350 (FIG. 3) while dramatically reducing the false positive count to 158 - a 98% reduction. In the above-described example, as there are 151 margins in the test set, there may be one false positive finding on average per margin (several thousands of patches) with the described prototype ensemble-based model.

In some embodiments, the respective first model 350 and the second model 360 may be optimized for the characteristics described respectively for the first model 350 (e.g., computationally expedient) and for the second model 360 (e.g., relatively higher classification accuracy). The first model 350 may be trained for focusing on computationally efficiency and minimizing false negative classifications by heavily penalizing missed positive margin classifications.

The second model 360 may be trained for accurate classifications and clinical decision performance, which may not be feasible or desirable if it were the sole classification model for the voluminous universe of the original input data set 310 (FIG. 3).

As an input data set for the second model 360, the filtered data set 320 represents a reduced search space (e.g., by approximately 96% in the present example), thereby allowing a feasible computational time for intraoperative operation.

Embodiments of combined operations of the first model 350 and the second model 360 provides a marked efficiency for application of machine learning in OCT-based cancer diagnostics and surgery.

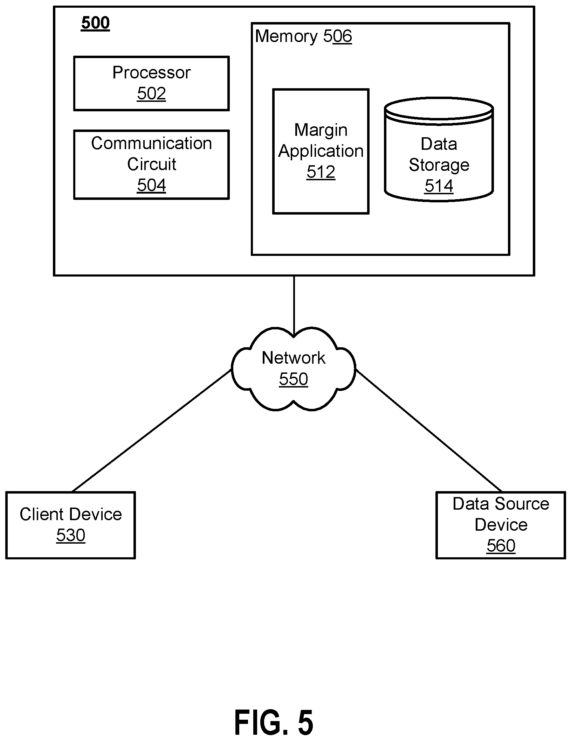

Reference is made to FIG. 5, which illustrates a system 500, in accordance with an embodiment of the present disclosure.

The system 500 may be configured to conduct operations of a clinical decision support system for intraoperatively identifying or categorizing excise tissue margins during patient lumpectomy procedures. In some embodiments, the system 500 may include operations for predicting whether excise tissue margins may include cancerous cells at its surface or near its surface. In scenarios where the system 500 predicts that cancerous cells may be identified at an excise tissue margin, a surgeon or medical team may wish to revisit the location where the excise tissue was removed and further remove additional tissue specimens. The system 500 may intraoperatively provide such predictions based on image analysis of the excise tissue margins, such that any subsequent further removal of additional tissue specimens may be made while the patient is still within the procedure / operating room environment.

The system 500 may transmit or receive data messages via a network 550 to or from a client device 530 or one or more data source devices 560. A single client device 530 and a data source device 560 are illustrated in FIG. 1; however, it may be understood that any number of client devices or data source devices may transmit or receive data messages to or from the system 500.

The network 550 may include a wired or wireless wide area network (WAN), local area network (LAN), a combination thereof, or other networks for carrying telecommunication signals. In some embodiments, network communications may be based on HTTP post requests or TCP connections. Other network communication operations or protocols may be contemplated.

The system 500 includes a processor 502 configured to implement processor-readable instructions that, when executed, configure the processor 502 to conduct operations described herein. For example, the system 502 may be configured to intraoperatively conduct operations for image analysis of excised tissue specimens and generating signals representing whether one or more tissue margins may be a positive margin. In some embodiments, the image analysis operations may include object detection, object segmentation, or object classification for providing tiered categorization of image data sets representing portions of excised tissue specimens.

In some examples, the processor 502 may be a microprocessor or microcontroller, a digital signal processing processor, an integrated circuit, a field programmable gate array, a reconfigurable processor, or combinations thereof.

The system 500 includes a communication circuit 504 configured to transmit or receive data messages to or from other computing devices, to access or connect to network resources, or to perform other computing applications by connecting to a network (or multiple networks) capable of carrying data.

In some embodiments, the network 550 may include the Internet, Ethernet, plain old telephone service line, public switch telephone network, integrated services digital network, digital subscriber line, coaxial cable, fiber optics, satellite, mobile, wireless, SS7 signaling network, fixed line, local area network, wide area network, or other networks, including one or more combination of the networks. In some examples, the communication circuit 504 may include one or more busses, interconnects, wires, circuits, or other types of communication circuits. The communication circuit 504 may provide an interface for communicating data between components of a single device or circuit.

The system 500 includes memory 506. The memory 506 may include one or a combination of computer memory, such as random-access memory, read-only memory, electro-optical memory, magneto-optical memory, erasable programmable read-only memory, and electrically-erasable programmable read-only memory, ferroelectric random-access memory, or the like. In some embodiments, the memory 506 may be storage media, such as hard disk drives, solid state drives, optical drives, or other types of memory.

The memory 506 may store a margin application 512 including processor-readable instructions for conducting one or more operations described herein. In some examples, the margin application 512 may include operations for retrieving image data sets representing excised tissue margins and for providing predictions on whether cancerous cells are identified at excised tissue margins based on the retrieved image data sets. In some embodiments, the margin application 512 may include one or a plurality of prediction models trained to, alone or in combination, optimize metrics associated with predicting whether cancerous cells are identified at excised tissue margins. For example, the metrics may include minimizing false negatives, minimizing false positives, maximizing true positives, or maximizing true negatives.

In some examples, the margin application 512 may include operations for retrieving image data sets representing excised tissue margins and for providing predictions on whether cancerous cells are identified at excised tissue margins based on the retrieved image data sets. In some embodiments, the margin application 512 may include one or a plurality of prediction models trained to optimize metrics associated with predicting whether cancerous cells are identified at excised tissue margins. For example, the metrics may include minimizing false negatives, minimizing false positives, maximizing true positives, and maximizing true negatives.

In the field of medical oncology or other health care specialties, the system 500 may be configured to provide predictions on whether generated images representing tissue specimen margins include cancerous cells at the margin surface or near the margin surface.

In a scenario where the system 500 intraoperatively predicts potential cancerous cells proximal to the tissue margin surface, a surgeon may elect to revisit the patient organ and remove further tissue. It may be desirable to provide such systems with prediction operations to maximize true positive and true negative predictions. As described in the present disclosure, it may be computationally rigorous and time consuming to minimize false negative predictions and to minimize false positive predictions for voluminous image data sets representing tissue margins. It may be desirable to provide models, as an example, for minimizing false negative predictions and to minimize false positive predictions within a computational time constraint suitable for intraoperative surgical procedure time requirements.

The system 500 includes data storage 514. In some embodiments, the data storage 514 may be a secure data store. In some embodiments, the data storage 514 may store training data sets including microscopic pathologic evaluation data of prior images of excised tissue specimens and associated ground truth data on whether cancerous cells are identified in respective images of excised tissue specimens. The training data sets may be received from one or more data source devices 560. Training data sets may be based on pathology-analysis confirmed results of reference tissue specimens. Other types of data sets, such as input data sets received form the client device 530, may be stored in the data store 514.

The client device 530 may be a computing device, such as a mobile device, a tablet device, a personal computer device, or a thin-client device that may be intraoperatively operated in combination with the system 500 during a lumpectomy procedure. In some embodiments, the client device 530 may include image capture devices such as cameras or other image generating sensors for generating images of excised tissue specimens.

The client device 530 may be configured to operate with the system 500 for executing data processes for predicting whether cancerous cells or other observed traits may be at excised tissue margins based on intraoperatively retrieved image data.

In some embodiments, the client device 530 may be a computing device operated by a team within an operating room environment, and the client device 530 may be configured to transmit and receive messages to and from the system 500 located outside the operating room environment. In some embodiments, the client device 530 may be configured as a peripheral device for use during an operating room procedure, and the client device 530 may be in data communication with the system 500 as a peripheral device.

In some embodiments, the client device 530 and the system 500 may be a combination of devices and be provided in an operating room environment.

In some embodiments, the client device 530 may include a processor, a memory, or a communication interface, similar to the example processor, memory, or communication interfaces of the system 500. In some embodiments, the client device 530 may be a computing device associated with a local area network. The client device 530 may be connected to the local area network and may transmit one or more data sets to the system 500.

The one or more data source devices 560 may be computing devices, such as data servers, database devices, or other data storing systems associated with health care entities associated with operating room environments. In some embodiments, the one or more data source devices 560 may be associated with other entities generating training data sets for pathologic evaluation of image data sets associated with excise tissue specimens or other sample specimens.

As described herein, the system 500 may be configured to conduct operations for providing a clinical decision support system to facilitate intraoperative identification or categorization of excised tissue margins during lumpectomy procedures. For example, the system 500 may conduct operations of models for providing predictions on whether image data representing tissue specimen margins may depict cancerous cells.

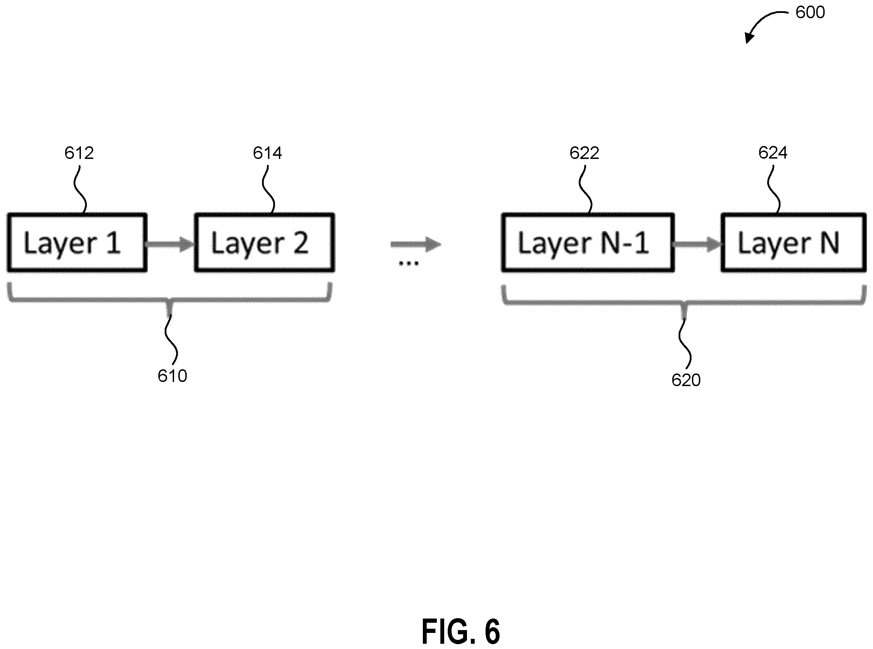

Reference is made to FIG. 6, which illustrates a high-level block diagram of a prediction system 600 for providing predictions on whether image data representing tissue specimen margins may depict cancerous cells, in accordance with embodiments of the present disclosure.

The prediction system 600 may include a combination of two prediction model tiers, including a first prediction application 610 and a second prediction application 620. The prediction system 600 retrieves an input data set representing a tissue specimen margin. In some embodiments, the input data set may include a plurality of wide-field OCT images that in combination represent the tissue specimen margin. Wide-field OCT images are described as an example, however, other types of images representing tissue specimen margins may be used.

Referring again to FIG. 2, in an example, the input data set may include a plurality of the wide-field OCT B-scan images 220 (FIG.2). One or more patches 230 may be defined by a sliding window width 240 traversing respective B-scan images 220. Depending on the size of a tissue specimen, a respective tissue specimen margin may be represented by 50,000 to 120,000 image patches. Due to the voluminous number of image patches representing the excised tissue specimen, the quantity of time required to intraoperatively conduct image analysis of the plurality of images for providing predictions on whether any of the images represent a positive margin may be time-prohibitive for allotted surgery time slots.

It may be desirable to provide prediction systems for generating predictions on whether images represent a positive tissue specimen margin within a required allotted surgery time while providing clinically acceptable prediction accuracy results.

In some embodiments, the first prediction application 610 may include one or more model layers. In FIG. 6, the first prediction application 610 includes a first model layer 612 and a second model layer 614. Although two model layers are associated with the first prediction application 610, any number of model layers may be included.

The voluminous image data set representing tissue specimen margins may be provided as an input to the prediction system 600. In some embodiments, the first prediction application 610 (e.g., first prediction tier) may include models trained for reducing a dimensionality of the image data set for downstream prediction operations. For example, the first prediction application 610 may include model operations trained for minimizing false negative predictions of positive tissue margins. False negative predictions of tissue margins may result in a prediction that a potentially cancerous tissue specimen does not have cancerous cells. In the health care field, false negative predictions may preclude further downstream analysis of the tissue specimen, thereby potentially providing a false diagnosis of a cancer patient.

In the health care field, false positive predictions, however, may trigger further downstream analysis of the tissue specimen. Although potentially unnecessary testing operations may be conducted based on the false positive prediction result, in the health care field, the unintended result of providing a false diagnosis of a cancer patient may thereby be avoided.

In some embodiments, the first prediction application 610 may include models trained to minimize false negative predictions. In some embodiments, the first prediction application 610 may be trained so as to not penalize false positive predictions. Thus, the first prediction application 610 may reduce the number of image data sets for downstream predictive analysis.

It may be appreciated that the first prediction application 610 may reduce the magnitude of the image data set representing tissue specimen margins to provide a filtered data set. The filtered data set may be provided as an input to the second prediction application 620. The first prediction application 610 may include model layers that may be computationally more efficient than the second prediction application 620 but may not provide as high prediction accuracy as compared to the second prediction application 620.

The second prediction application 620 may generate predictions based on the output of the first prediction application 620. As the output of the first prediction application 620 includes the filtered data set representing several fold reduction in image data representing tissue specimen margins, it may be computationally acceptable to conduct a computationally more intensive set of operations on the filtered data set. In the present example, the filtered data set may include image data predicted to include cancerous cells (e.g., a positive margin). The filtered data set may include image data that may be indiscriminate of whether the prediction is a true positive or a false positive.

The second prediction application 620 may include one or more model layers. In FIG. 6, the second prediction application 620 includes 'layer N-1' 622 and 'layer N' 624. Although two model layers are associated with the second prediction application 620, any number of model layers may be included.

In some embodiments, the second prediction application 620 may be trained to provide high prediction accuracy, for example, for detecting the false positive predictions associated with images representing tissue specimen margins. The second prediction application 620 may include models for providing predictions based on the filtered data set, such that false positive predictions that images representing tissue specimen margins have cancerous cells are further reduced.

In some scenarios, the quantity of pathology-confirmed images of tissue specimen margins suitable for training models for visually predicting cancerous cells on a excised tissue specimen may be relatively small. It may take numerous years to retrieve a representative sample size of pathology-confirmed images of tissue specimen margins suitable for training prediction models. To utilize the limited quantity of pathology-confirmed images of tissue specimen margins, in some embodiments, the first prediction application 610 may include two or more model layers respectively trained based on a variation of training objectives. For example, the first model layer 612 and the second model layer 614 may be trained based on different cost functions.

In another example, the first model layer 612 may be trained by heavily penalizing false negative predictions while the second model layer 614 may be trained based on a target F1 score criteria. A target F1 score may represent a hybrid metric that takes into account prediction precision and recall metrics.

In embodiments of the first prediction application 610 including two or more model layers respectively trained based on a variation of training objectives, the respective model layers may generate a prediction / vote on whether a particular image patch may include cancerous cells (e.g., suspicious patch or non-suspicious patch). If one or more of the model layers provide a prediction that a given image patch may include cancerous cells, that image patch may be tagged as a tissue specimen with a positive margin, irrespective of whether the prediction is a true positive or a false positive prediction. Such identification of tissue specimens with positive margins may be subject to downstream prediction operations of the second prediction application 620.

In the present example, if the collection of model layers unanimously predict that a given image patch does not include cancerous cells, the image patch may be tagged as a tissue specimen with a negative margin. As described, the combination of model layers of the first prediction application 610 may be trained to minimize false negatives and to not penalize false positives.

In some embodiments, the two or more model layers of the first prediction application 610 may be configured as successive model layers trained based on a variation of training objectives. The respective successive layers may, in sequence, further reduce the number of image patches identified as having negative margins. The combination of model layers of the first prediction application 610 may reduce the image data set representing tissue specimen margins based on removing image data tagged as negative margins for downstream prediction operations.

In some embodiments, the one or more model layers of the first prediction application 610 may generate confidence values for associating with image patches representing portions of the tissue specimen margins. The second model layer 614 may rank and sort image patches identified as potentially representing a positive margin based on confidence metrics and may iteratively tag image patches identified as representing a positive margin with high confidence for downstream prediction operations associated with the second prediction application 620.

In some embodiments, above-described examples of the filtered data set may include a reduced number of image patches representing portions of tissue specimen margins. The filtered data set may represent a combination of image patches tagged as potential positive margins. In some scenarios, the combination of image patches tagged as potential positive margins may include margins that may be true positives and false positives.

As the filtered data set represents a variation of the original data set that has been reduced by several orders of magnitude, it may be acceptable to conduct computationally intensive model operations requiring increased computational time within the operating procedure room at least because the filtered data set is a reduced data set. For example, it may be acceptable to utilize a 10-fold increase in computation time for greater prediction accuracy for a data set that may have been reduced by as much as 25-fold in size.

In some embodiments, the second prediction application 620 may include a plurality of model layers 622, 624 respectively trained based on different requirements. In some embodiments, the respective model layers 622, 624 may be configured to provide parallel prediction output and the second prediction application 620 may conduct operations for determining whether a majority of the multiple model layers provide a prediction of positive margin. In scenarios where a majority (or all) of the multiple model layers generate a prediction that a particular image patch represents a positive margin, the second prediction application 620 may provide a prediction output representing the majority prediction consensus.

In some embodiments, the model layers 622, 624 may be one or a combination of an EfficientNet model, a ResNet model, or variations of such models. In some embodiments one or more model layers of the first prediction application 610 or the second prediction application 620 may be classical pattern recognition models based on object detection, object segmentation, or object classification operations, among other operations.

In some embodiments, the plurality of model layers 622, 624 may be configured as an ensemble of successive model layers configured to sequentially generate a prediction on whether image patches represent positive margins. Such examples of model layers 622, 624 may be configured to provide an iterative filtering of image patches. Based on the successive model layers 622, 624 trained based on variations of training criteria, the likelihood of falsely identified positive patches may be reduced.

Based on above-described features, embodiments of systems described herein may include a combination of model layers for: (1) increasing the identification of image patches representing negative tissue specimen margins at the first prediction application 610, which may include image patches identified as true negative margins or false positive margins for reducing an image data set for downstream prediction model operations; and (2) maximizing accuracy of prediction model operations for a filtered data set that may include image patches representing true positive tissue specimen margins and false positive tissue specimen margins at the second prediction application 620.

In some embodiments described in the present disclosure, the input data set to the system 500 (FIG. 5) configured to intraoperatively identify or categorize excess tissue margins during patent lumpectomy procedures may include a plurality of B-scan images 220 (FIG. 2). In some embodiments, the B-scan images 220 may be subdivided and represented by a plurality of image patches 230 defined by a sliding window width 240. In some embodiments, an image capture device may generate the B-scan images 220 based on a prior-defined image resolution setting, B-scan cross section thickness setting, image contrast setting, signal-to-noise ratio image setting, among other image settings. In some scenarios, it may be desirable to dynamically update image settings when generating B-scan images 220 for downstream prediction operations.

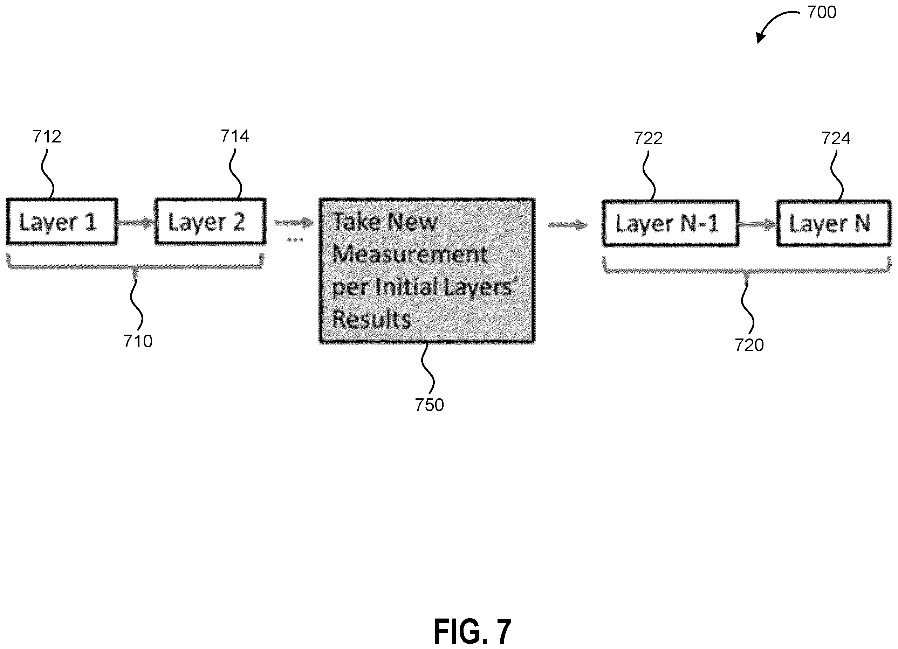

Reference is made to FIG. 7, which illustrates a high-level block diagram of a prediction system 700 for providing predictions on whether image data representing tissue specimen margins may depict cancerous cells, in accordance with embodiments of the present disclosure.

The prediction system 700 may be similar to the prediction system 600 described with reference to FIG. 6. For example, the prediction system 700 in FIG. 7 may include a combination of two prediction model tiers, including a first prediction application 710 and a second prediction application 720. The prediction system 700 may retrieve an input data set representing a tissue specimen margin. The input data set may be based on images generated according to prior-defined image generation settings.

In some embodiments, the first prediction application 710 may include one or a plurality of model layers 712, 714. The second prediction application 720 may include one or a plurality of model layers 722, 724. The voluminous image data set representing tissue specimen margins may be provided as an input to the prediction system 700.

Similar to the system described with reference to FIG. 6, the first prediction application 710 may include models trained for reducing a dimensionality of the image data set for downstream prediction operations. For example, the first prediction application 710 may include model operations trained for minimizing false negative predictions of tissue specimen margins. False negative predictions of tissue margins may result in a prediction that a potentially cancerous tissue specimen does not haver cancerous cells. With a cancer patient, a false negative prediction of a tissue specimen margin may preclude further downstream analysis of the tissue specimen, thereby potentially providing a false diagnosis for the cancer patient.

In the heath-care sector, as false positive predictions may trigger further downstream analysis of the tissue specimen, model layers of the first prediction application 710 may be trained to minimize false negative predictions whilst not heavily penalizing false positive predictions.

In some embodiments, the output of the first prediction application 710 generates a filtered data set having a reduced quantity of images representing portions of the tissue specimen margin. The filtered data set may include image patches tagged as potential positive margins. For example, the filtered data set may include images identified as true positive margins or false positive margins.

In some embodiments, at operation 750, the system 700 may conduct operations for generating additional image data associated with characteristics of image patches included in the filtered data set. For example, the system 700 may generate additional image data associated with the catchment region of identified image patches based on at least one of higher resolution image settings, thinner cross section image settings, varying contrast image settings, higher signal-to-noise ratio scans based on greater signal averaging operations, among other altered image generating settings.

Such alteration of image generation settings may be triggered based on the prediction outcomes from the first prediction application 710. Such alteration image generation settings may represent imaging operations that may be otherwise too complex or too computationally intensive for conducting on a full set of image patches representing the totality of the tissue specimen margins.

Embodiments of the operations 750 for generating additional image data based on altered image generation settings may increase the efficiency or efficacy of image data collection, where operations of the first prediction application 710 may in effect provide predictive insight data for honing in on portions of the tissue specimen margin where higher quality, more time consuming image data acquisition is limited to particular margin regions of interest.

In the above-described examples, the generated additional image data representing portions of the tissue specimen margin may be provided as the filtered input to the second prediction application 720. Similar to the second prediction application 620 described with reference to FIG. 6, the second prediction application 720 may include one or more model layers configured to provide a prediction output that maximizes prediction accuracy for identifying false positive tissue specimen margins.

In some embodiments, an increase in complexity of the filtered data set (e.g., based on operation 750 described above) in combination with an "x"-fold (e.g., 10-fold) increase in computational time for greater prediction accuracy associated with the second prediction application 720 may be an acceptable tradeoff when the data set representing image patches of a tissue specimen has been reduced in numerical quantity by "y"-fold (e.g., 25-fold) based on the first prediction application 710. In the present example, y may be greater than x.

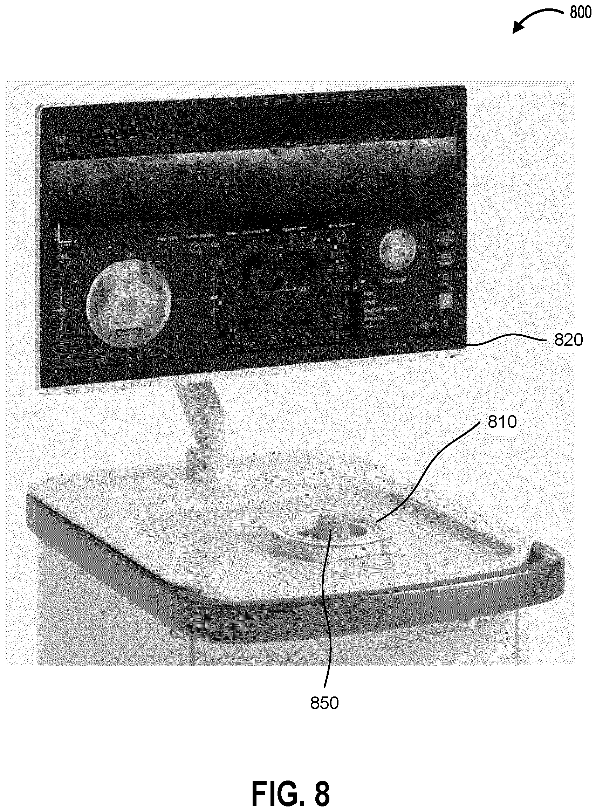

Reference is made to FIG. 8, which illustrates a tissue specimen analysis system 800, in accordance with an embodiment of the present disclosure. In some scenarios, the tissue analysis system 800 may be an example of the system 500 described with reference to FIG. 5.

The tissue specimen analysis system 800 may include an imaging receptacle 810 and a display 820 for displaying imaging data or analytical data associated with a tissue specimen 850 placed within the imaging receptacle 810.

In some embodiments, the tissue specimen analysis system 800 may be located within an operating room. The tissue specimen analysis system 800 may be configured to receive tissue specimens 850 during a surgical procedure, and the tissue specimen analysis system 800 may conduct operations for imaging the tissue specimen 850 and conducting operations for determining whether there may be suspected cancerous cells at or near a margin of the tissue specimen 850. Operations for determining whether there may be suspected cancerous cells at or near the surface of the tissue specimen 850 may be based on one or more embodiments of the prediction applications described in the present disclosure.

In scenarios where cancerous cells may be inferred to be at or near the surface of the tissue specimen 850, the tissue specimen analysis system 800 may, based on ink indicia previously applied to the tissue specimen 850, identify the spatial orientation of the tissue specimen 850 and provide data to assist the surgical team with identifying an anatomical location where further tissue may be excised. For example, the ink indicia previously applied to the tissue specimen 850 may be adapted to suggest that the currently imaged tissue surface or margin is of one of the anterior side, posterior side, superior side, inferior side, medial side, or lateral side of the tissue specimen 850. Having an inference of which tissue surface or margin is being imaged may assist the surgical team with identifying a location at the patient's organ for further retrieval of excised tissue.

The tissue specimen analysis system 800 may include the imaging receptacle 810 adapted to receive a tissue specimen 850. Prior to being placed in the imaging receptacle 810, the tissue specimen 850 may have been marked with a plurality of ink segments for visually delineating a plurality of tissue surfaces or margins for analysis.

During an operating procedure for removing tissue specimens from a patient, a surgeon or a medical team member may need to expediently and accurately identify the respective tissue surfaces or margins previously marked and rotate the tissue specimen 850 within the imaging receptacle 810.

In some scenarios, tissue specimens 850 may be fragile and can have variable solidity. The tissue specimen 850 may have a volumetric shape that may change when rotated from one spatial orientation to a subsequent spatial orientation. When tissue specimens 850 are placed within the imaging receptacle 810, the tissue specimen 850 may collapse onto the imaging surface. In some scenarios, the structural collapse of the tissue specimen 850 may be referred to as a 'pancaking effect'. As the tissue specimen 850 is manipulated, the shape of the tissue specimen 850 may change thereby making it challenging to identify tissue surfaces or margins, even with the aid of sutures or other physical landmarks.

When the tissue specimen 850 is placed within the imaging receptacle 810, the tissue specimen 850 may be physically immobilized. In some embodiments, a vacuum suction device may be adapted to physically immobilize the tissue specimen 850 thereby amplifying the pancaking effect on the tissue specimen 850. Immobilizing the tissue specimen 850 ensures the tissue specimen 850 is in secure contact with the imaging surface glass. As the tissue specimen 850 may be immobilized within the imaging receptacle 810, the plurality of ink segments may be visible within images and may assist with providing delineated markers separating tissue surfaces or margins of the tissue specimen 850.

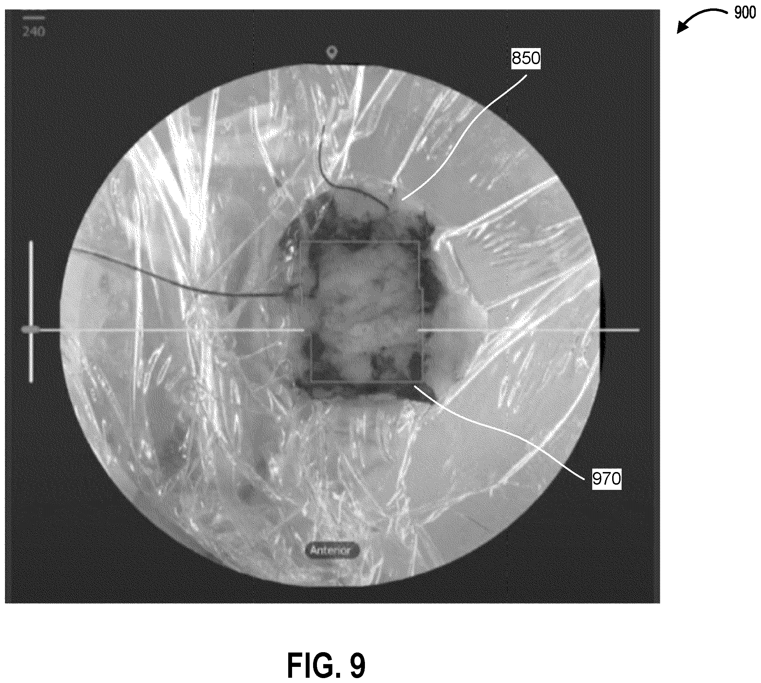

Reference is made to FIG. 9, which illustrates an image 900 representing a tissue surface of the tissue specimen 850 described in FIG. 8. The image 900 may be generated by the tissue specimen analysis system 800 (FIG. 8). The tissue specimen 850 may be within the imaging receptacle. Illustrated tissue specimen 850 may have been immobilized and the tissue specimen 850 may be subject to the pancaking effect such that the tissue surface is in contact with an imaging surface.

In FIG. 9, the image 900 shows a plurality of ink segments 970 circumscribing a tissue surface or margin. In the example illustrated in FIG. 9, the tissue surface is associated with an anterior side of the tissue specimen 850. In some embodiments described herein, methods of generating ink segments 970 or ink indicia associated with respective tissue margins or surfaces may be for providing coded indicia. As such, tissue specimen imaging systems 800 may infer spatial orientation data associated with the tissue margin / surface of the tissue specimen 850.

In scenarios where a surgical team decides to revisit the surgical site for obtaining further tissues from the patient, the surgical team may infer or identify the required location at the patient's organ that corresponds to the tissue margin illustrated in the tissue image 900.

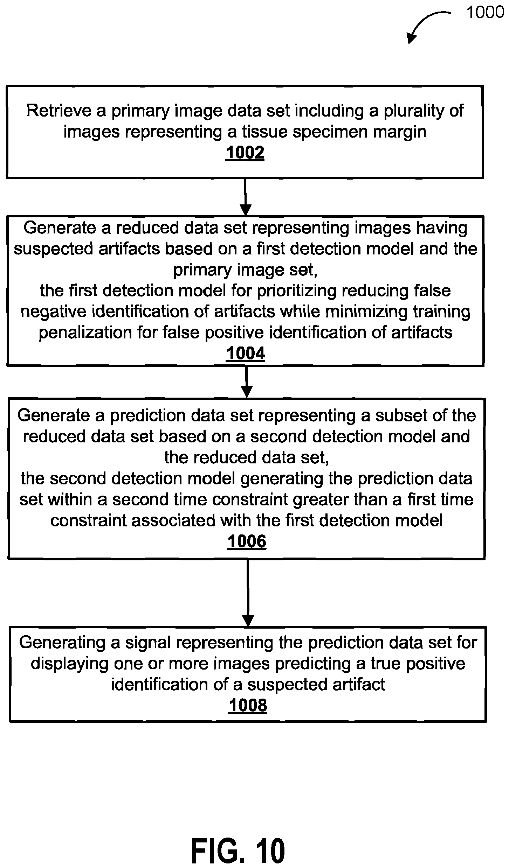

Reference is made to FIG. 10, which illustrates a flowchart of a method 1000 for tissue specimen analysis, in accordance with an embodiment of the present disclosure. The method may be conducted by the processor 502 of the system 500 (FIG. 5). Processor-readable instructions may be stored in the memory 506 and may be associated with the margin application 512 or other processor readable applications not illustrated in FIG. 5. The method 1000 may include operations, such as data retrievals, data manipulations, data storage, or the like, and may include other computer executable functions.

In some scenarios, it may be desirable to determine during a surgical procedure whether an identified cancerous lesion has been entirely removed while a surgical patient is still within an operating room environment. It may be desirable to provide image analysis operations for excised tissue specimens in substantially real time during a surgical procedure and with relatively high accuracy or precision akin to pathologic evaluation of tissue samples.

In some embodiments, tissue specimen margins may be represented by a plurality of wide field OCT B-scan images. Further, the B-scan images may be further sub-divided into image patches for analysis. In some scenarios, a voluminous number of images may need to be analyzed for determining whether a tissue specimen margin may be a positive margin. It may be desirable to optimize the analysis based on at least the following metrics, including minimizing false negative identification of cancerous cells, minimizing false positive identification of cancerous cells, maximizing true positive identification of cancerous cells.

As described in some examples, in the heath-care sector, a false positive prediction of whether a tissue specimen may have suspected cancerous cells at a tissue specimen margin may trigger downstream analysis of the tissue spectrum. It may be desirable to provide systems and methods for conducting tissue specimen analysis based on at least two tiers of prediction models.

At operation 1002, the processor may retrieve a primary image data set including a plurality of images representing a tissue specimen margin. For example, a tissue margin may include 300 to 700 wide field OCT B-scan images, where respective B-scan images may be divided into overlapping rectilinear regions of interest known as image patches. In some scenarios, respective tissue margins may include approximately 30 patches per B-scan image.

Some examples described include wide field OCT images, however other types of imaging technology may be used for generating images of tissue specimen margins.

Due to the voluminous number of image patches representing sub-divided image portions of an excised tissue specimen, it may be computationally intensive to intraoperatively predict whether the respective patches represent a positive or negative margin on a substantially near real-time basis during a lumpectomy procedure. In some embodiments, at least two tiers of prediction models may be used.

At operation 1004, the processor may generate a reduced data set representing images having suspected artifacts based on a first detection model and the primary image set. The first detection model may be trained based on pathology-confirmed images.

In some embodiments, the first detection model may be trained to prioritize reducing false negative identification of artifacts while minimizing training penalization for false positive identification of artifacts. The first detection model may be trained to reduce the data set representing the tissue specimen margin, whilst providing a reduced data set within a first time constraint. In some example systems, operations described herein may reduce the search space by 96%, thereby providing a 24x reduction in computation time. The inferencing time for one image patch may be about 10ms. With 120,000 image patches, computation time may be approximately 1,200 seconds ~ 20minutes. Reducing computation time by 24x, operations may provide predictions of positive margins or negative margins in less than 60 seconds, as opposed to 20 minutes.

At operation 1006, the processor may generate a prediction data representing a subset of the reduced data set based on a second detection model and the reduced data set. The second detection model may generate the prediction data set within a second time constraint greater than a first time constraint associated with the first detection model.

In some embodiments, as the reduced data set represents a less voluminous data set of potential images representing images depicting artifacts or cancerous cells, the second detection model may be trained to conduct operations to yield higher accuracy. For example, as the first detection model may be trained to prioritize reducing false negative identification of artifacts, the second detection model may be trained to reducing the false positive identification of artifacts. In some embodiments, the second detection model may be trained to provide greater accuracy when predicting whether the image depicts artifacts (e.g., cancerous cells). As an example, because the reduced data set (e.g., output from the first detection model) may be a less voluminous data set resulting in a reduced 'problem set' by 25-fold, as an example, it may be acceptable to train the second detection model for intraoperatively predicting whether images of the reduced data set depict artifacts, even if the computation time or complexity of the second detection model may increase by 10-fold as compared to the first detection model.

At operation 1008, the processor may generate a signal representing the prediction data set for displaying one or more images predicting a true positive identification of a suspected artifact. In some embodiments, the images may represent tissue specimen margins and suspected artifacts may be image data representing suspected cancerous cells.

In some embodiments, it may be suitable to train a first detection model to be computationally efficient for generating a reduced data set for analysis, where the reduced data set may include false positive identification of artifacts. It may be acceptable to include images having potential false positive identification of artifacts for prediction in the second detection model, as the second detection model may be trained for greater prediction accuracy while being relatively less computationally efficient.

Conversely, it may be undesirable if false negative predictions of tissue specimen margins were not identified by the first detection model, as a false negative prediction of the tissue specimen margin may preclude further downstream analysis of the tissue specimen. As in some embodiments described herein, the first detection model may be trained for prioritizing reducing false negative identification of artifacts while minimizing training penalization of false positive identification of artifacts.

The term "connected" or "coupled to" may include both direct coupling (in which two elements that are coupled to each other contact each other) and indirect coupling (in which at least one additional element is located between the two elements).

Although the embodiments have been described in detail, it should be understood that various changes, substitutions and alterations can be made herein without departing from the scope. Moreover, the scope of the present disclosure is not intended to be limited to the particular embodiments of the process, machine, manufacture, composition of matter, means, methods and steps described in the specification.

As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein may be utilized. Accordingly, the appended claims are intended to include within their scope such processes, machines, manufacture, compositions of matter, means, methods, or steps.

The description provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for interprocess communication. In still other embodiments, there may be a combination of communication interfaces implemented as hardware, software, and combination thereof.

Throughout the foregoing discussion, numerous references will be made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements.

As can be understood, the examples described above and illustrated are intended to be exemplary only.

## Claims

1. A system for tissue specimen analysis comprising:
a processor;
a memory coupled to the processor and storing processor-executable instructions that, when executed, configure the processor to:
retrieve a primary image data set including a plurality of images representing a tissue specimen margin;
generate a reduced data set representing images having suspected artifacts based on a first detection model and the primary image set, the first detection model trained based on pathology-confirmed images and for prioritizing reducing false negative identification of artifacts while minimizing training penalization for false positive identification of artifacts;
generate a prediction data set representing a subset of the reduced data set based on a second detection model and the reduced data set, the second detection model generating the prediction data set within a second time constraint greater than a first time constraint associated with the first detection model; and
generate a signal representing the prediction data set for displaying one or more images predicting a true positive identification of a suspected artifact.

2. The system of claim 1, comprising an image capture device coupled to the processor, and wherein the memory includes processor-executable instructions that, when executed, configure the processor to:
generate a re-imaged data set based on the reduced data set and one or more altered image capture parameters, wherein the re-imaged data set includes images representing anatomical locations of the tissue specimen margin represented in the reduced data set;
and wherein the prediction data set is generated based on the re-imaged data set and the second detection model.

3. The system of claim 2, wherein the altered image capture parameters include at least one of: image resolution setting, cross-section thickness image setting, contrast setting, or signal to noise ratio image setting.

4. The system of any preceding claim, wherein the second detection model includes an ensemble of voting neural networks for predicting positive identification of artifacts.

5. The system of any preceding claim, wherein at least one of the first detection model or the second detection model includes a plurality of model layers respectively trained for optimizing distinct criteria or based on a unique training data set.

6. The system of any preceding claim, wherein the tissue specimen margin represents an excised adipose tissue specimen.

7. The system of any preceding claim, wherein identification of artifacts in one or more images represents identification of cancerous cells at or proximal to the tissue specimen margin.

8. The system of any preceding claim, wherein the primary image data set representing the tissue specimen margin includes a plurality of wide-field optical coherence tomography image scans.

9. The system of any preceding claim, wherein the first detection model includes a convolutional neural network model including five convolutional layers in combination with three fully connected layers to provide a classification model.

10. A method of tissue specimen analysis comprising:
retrieving a primary image data set including a plurality of images representing a tissue specimen margin;
generating a reduced data set representing images having suspected artifacts based on a first detection model and the primary image set, the first detection model trained based on pathology-confirmed images and for prioritizing reducing false negative identification of artifacts while minimizing training penalization for false positive identification of artifacts;
generating a prediction data set representing a subset of the reduced data set based on a second detection model and the reduced data set, the second detection model generating the prediction data set within a second time constraint greater than a first time constraint associated with the first detection model; and
generating a signal representing the prediction data set for displaying one or more images predicting a true positive identification of a suspected artifact.

11. A non-transitory computer-readable medium having stored thereon machine interpretable instructions which, when executed by a processor, cause the processor to perform a computer implemented method of tissue specimen analysis comprising:
retrieving a primary image data set including a plurality of images representing a tissue specimen margin;
generating a reduced data set representing images having suspected artifacts based on a first detection model and the primary image set, the first detection model trained based on pathology-confirmed images and for prioritizing reducing false negative identification of artifacts while minimizing training penalization for false positive identification of artifacts;
generating a prediction data set representing a subset of the reduced data set based on a second detection model and the reduced data set, the second detection model generating the prediction data set within a second time constraint greater than a first time constraint associated with the first detection model; and
generating a signal representing the prediction data set for displaying one or more images predicting a true positive identification of a suspected artifact.
